# FASCICULE DE BREVET EUROPEEN

(11) **EP 0 528 025 B1**
(45) Date de publication et mention de la délivrance du brevet: **12.06.1996**
(21) Numéro de dépôt: 92908723.7
(22) Date de dépôt: 04.03.1992
(51) Int. Cl.: C03B 5/02, C03B 5/12, C03B 5/26

(54) **FOUR DE FUSION EN CONTINU DE MELANGES D'OXYDES PAR INDUCTION DIRECTE A HAUTE FREQUENCE A TEMPS D'AFFINAGE TRES COURT ET A FAIBLE CONSOMMATION EN ENERGIE**
KONTINUIERLICHER SCHMELZOFEN FÜR OXIDGEMENGE, DIREKTE HOCH-FREQUENZ-INDUKTION VERWENDEND, MIT SEHR KURZEN RAFFINIERZEITEN UND NIEDRIGEM ENERGIEVERBRAUCH
A CONTINUOUS MELTING FURNACE FOR OXIDE MIXTURES USING DIRECT HIGH FREQUENCY INDUCTION AND HAVING VERY SHORT REFINING TIMES AND LOW POWER CONSUMPTION

(30) Priorité: 05.03.1991 FR 9102596
(43) Date de publication de la demande: 24.02.1993
(73) Titulaire: COMMISSARIAT A L'ENERGIE ATOMIQUE, F-75015 Paris (FR); C.F.E.I. (COMPAGNIE FRANCAISE D'ELECTROTHERMIE INDUSTRIELLE), F-38170 Seyssinet-Pariset (FR)
(72) Inventeur: BOEN, Roger, F-30130 St. Alexandre (FR); LADIRAT, Christian, F-30126 St. Laurent des Arbres (FR); GNILKA, Jean-Pierre, F-30200 Venejean (FR); PILLIOL, Henri, F-84000 Avignon (FR)
(74) Mandataire: Gandrille, Pierre
(86) Numéro de dépôt international: FR9200199
(87) Numéro de publication internationale: WO9215531

(56) Documents cités:
- EP-A- 0 118 580
- EP-A- 0 265 051
- WO-A-90/09211
- DE-A- 3 724 971
- DE-A- 3 824 829
- FR-A- 2 589 228
- GB-A- 0 626 972
- US-A- 1 603 221

## Description

La présente invention se rapporte d'une manière générale à la production en continu d'oxydes fondus dans un four de fusion chauffé par induction directe à haute fréquence et comportant à son sommet une entrée pour la distribution continue des oxydes à fondre et à sa partie inférieure une buse de sortie pour les produits fondus.

De façon plus précise encore, la présente invention se rapporte à un tel four de fusion par induction directe du type à creuset froid, c'est-à-dire dont les parois latérales sont refroidies et comportent de ce fait une croûte protectrice solide de l'oxyde à fondre.

Dans la plupart des applications envisagées jusqu'à ce jour, pour de tels fours, les matériaux à base d'oxydes tels que par exemple verres colorants, vitro-céramiques, cristal, etc. que l'on préparait, devaient subir un affinage prolongé, c'est-à-dire en fin de compte être soumis à un temps de séjour important dans le four. Cette nécessité ainsi que la conception des fours de l'état de la technique conduit à des consommations spécifiques d'énergie électrique qui sont incompatibles avec la production d'oxydes fondus à affinage réduit tels qu'on les utilise dans des applications où le degré d'affinage n'est pas déterminant tel que par exemple le domaine des émaux employés pour le matériel électroménager, ou de la vitrification des déchets.

On commencera par conséquent par rappeler la conception actuelle des fours à induction directe en creuset froid en expliquant leurs caractéristiques, les raisons de leur taux de consommation électrique élevé, et par conséquent, leur inappropriation à l'élaboration de verres à affinage réduit tels qu'on vient de les définir ci-dessus.

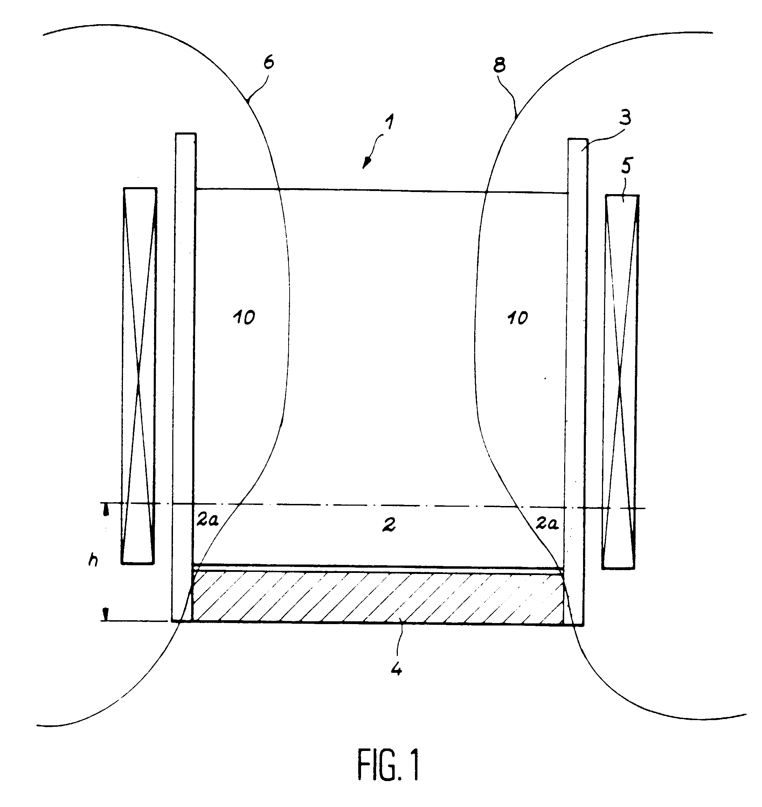

Les fours à induction directe actuellement en service dans l'industrie ont une forme géométrique telle que le bain d'oxydes fondus ait une hauteur à peu près égale à son diamètre. Cette forme a été choisie pour trois raisons essentielles :
- d'abord elle permet d'assurer un bon rendement électrique de transfert de la puissance entre les bobines inductrices et le matériau fondu, car les fours dont la hauteur de bain est faible sont réputés avoir un rendement réduit ;
- ensuite, une hauteur importante de produit fondu assure à ceux-ci un temps de séjour également élevé (de l'ordre d'une dizaine d'heures) dans le four et permet par conséquent un affinage poussé qui conduit à l'élimination des bulles éventuelles et à l'homogénéisation chimique et thermique de l'ensemble de la phase liquide ;
- enfin, la troisième raison d'être de ce choix dimensionnel découle des problèmes dus à la soie du four lorsque, pour permettre son refroidissement, elle est métallique et constitue alors un écran très gênant pour la pénétration au sein du bain fondu du champ électromagnétique de chauffage de ce bain. En effet, dans le cas où la sole est réfractaire, c'est-à-dire isolante électriquement, la majorité de la puissance électromagnétique émise par l'inducteur est dissipée dans la zone de pénétration des courants induits qui concernent la majeure partie de la masse du bain. En revanche, si la sole est en métal refroidi par l'eau et ceci est un cas extrêmement fréquent, elle constitue un écran au champ magnétique et, en déformant les lignes de champ, crée, comme on peut le voir sur la figure 1 qui décrit cet art connu, une zone 2 dans laquelle le chauffage du bain est réduit. Sur cette figure 1, un four 1 comporte un creuset froid 3, un inducteur 5 et une sole métallique 4. Les courbes 6 et 8 montrent les domaines 10 de pénétration des courants induits dans le bain. Dans la zone annulaire 2, à la partie inférieure du bain surmontant directement la sole métallique refroidie 4, se produit une restriction considérable du chauffage du bain par les courants induits. Dans ces conditions, on conçoit très bien qu'une augmentation de la hauteur du bain diminue l'importance du phénomène en valeur relative par rapport à l'ensemble de ce bain.

Malheureusement, l'extension ainsi donnée à la hauteur du four qui conditionne corrélativement celle de sa surface latérale, conduit dans les fours à paroi froide à des pertes thermiques au travers des parois verticales du four qui sont très élevées avec une densité de flux par exemple de l'ordre de 15 à 40 W/cm² selon la température de fusion du mélange et ses caractéristiques physiques. Les pertes au travers de la sole du four sont toutefois plus faibles et correspondent en général à des densités de flux qui se situent à des valeurs comprises entre 5 et 15W/cm². L'ensemble de ces pertes thermiques conduit à des consommations électriques spécifiques très élevées, qui sont supérieures souvent à 5 kWh/kg de produit fondu.

A titre d'exemple, un four de 50 cm de diamètre, dont la hauteur de bain fondu est égale à 50 cm peut élaborer 30 kg/h d'un verre à 1300°C. La densité du flux thermique vers les parois verticales est égale à 30 W/cm², ce qui conduit à une perte thermique de 236 kW ; la densité de flux thermique vers la sole est égale à 10 W/cm², ce qui conduit à une perte thermique de 20 kWh pour fondre 1 kg de verre et le rendement électrique du four est égal à 80%, ce qui conduit à une consommation énergétique égale à 11,29 kWh/kg.

Ces chiffres sont rédhibitoires pour des applications industrielles courantes ne nécessitant que la préparation de produits à faible affinage.

La présente invention a précisément pour objet un four à fusion en continu de mélanges d'oxydes par induction directe qui permet d'obtenir avec un temps d'affinage très court et une consommation d'énergie électrique très inférieure à celle des fours connus jusqu'à ce jour, des produits présentant néanmoins un grand intérêt pour certains domaines industriels.

Ce four à fusion en continu de mélanges d'oxydes par induction directe à haute fréquence à temps d'affinage très court et à faible consommation en énergie, comprenant une entrée et une buse de sortie des oxydes en continu dans un creuset métallique à parois froides chauffé par une bobine à haute fréquence, se caractérise en ce que la hauteur du bain d'oxydes est comprise entre 2 cm et 20% du diamètre du creuset métallique et en ce que la sole se compose d'inserts métalliques indépendants noyés dans un matériau réfractaire, chacun des inserts métalliques précédents étant constitué d'une portion de tube comprenant une entrée et une sortie pour la circulation d'un liquide de refroidissement, la sole du four étant ainsi à la fois transparente au champ magnétique inducteur et suffisamment refroidie pour assurer la formation et le maintien d'une croûte solide protectrice au fond du creuset.

Comme on le voit, l'invention résulte de la combinaison de deux moyens dont les effets se combinent pour parvenir au résultat énergétique recherché. Le premier moyen est une diminution de la hauteur du bain d'oxydes par rapport au diamètre du creuset et le deuxième moyen est une constitution particulière de la sole du four qui lui permet d'être à la fois suffisamment transparente au champ magnétique pour assurer une bonne pénétration des lignes de champ et par conséquent des courants induits de chauffage du bain dans ce dernier et le maintien par refroidissement d'une croûte solide protectrice au fond du creuset.

En effet, on sait que dans les fours de fusion par induction directe dans un creuset froid, la fusion s'effectue pratiquement à la surface du bain fondu sur une épaisseur de l'ordre de 1 cm et que le temps nécessaire pour l'affinage est beaucoup plus court que dans un four classique à creuset chaud. Cette constatation, rapprochée de l'inconvénient des pertes thermiques importantes lorsque les parois verticales du four sont élevées a donc conduit à la conception d'un four très plat dont les parois verticales ont une dimension réduite, ce qui diminue ainsi fortement la surface de contact entre le bain fondu et cette paroi verticale.

Comme par ailleurs, une telle diminution certes très utile des pertes thermiques ne présente d'intérêt que si elle s'accompagne d'un maintien du bon rendement électrique du chauffage de ce four, cette dernière considération imposait de ne pas utiliser une sole métallique massive refroidie qui, comme on l'a expliqué en se référant à la figure 1, constitue un écran trop important à la pénétration du champ électro-magnétique au-dessus de la sole dans la majorité du volume du bain. C'est la raison pour laquelle, le four objet de l'invention comporte une sole à la fois transparente au champ magnétique inducteur et suffisamment refroidie pour maintenir une croûte solide de protection au fond du creuset, empêchant l'attaque de la sole par le bain fondu généralement très corrosif.

A cet effet et conformément à une caractéristique importante de l'invention, la sole se compose d'inserts métalliques indépendants, noyés dans un matériau réfractaire, chacun des inserts métalliques précédents étant constitué d'une portion de tube comprenant une entrée et une sortie pour la circulation d'un liquide de refroidissement.

Dans une sole de cette nature de composition mixte, c'est le matériau réfractaire qui sert de passage aux lignes du champ magnétique vers le bain et ce sont les inserts métalliques indépendants et répartis de façon discrète dans le réfractaire qui servent à maintenir pour l'ensemble de la sole, une température suffisamment basse permettant la formation d'une croûte. A cet effet, chacun des inserts métalliques constitué d'une portion tubulaire indépendante comporte une entrée et une sortie pour la circulation du liquide de refroidissement, le plus souvent d'ailleurs de l'eau.

Enfin, selon un mode de mise en oeuvre très répandu de l'invention, la sole a la forme d'une plaque circulaire dans laquelle les inserts métalliques sont répartis selon une série de couronnes concentriques comportant chacune plusieurs inserts courbes séparés les uns des autres par le matériau réfractaire.

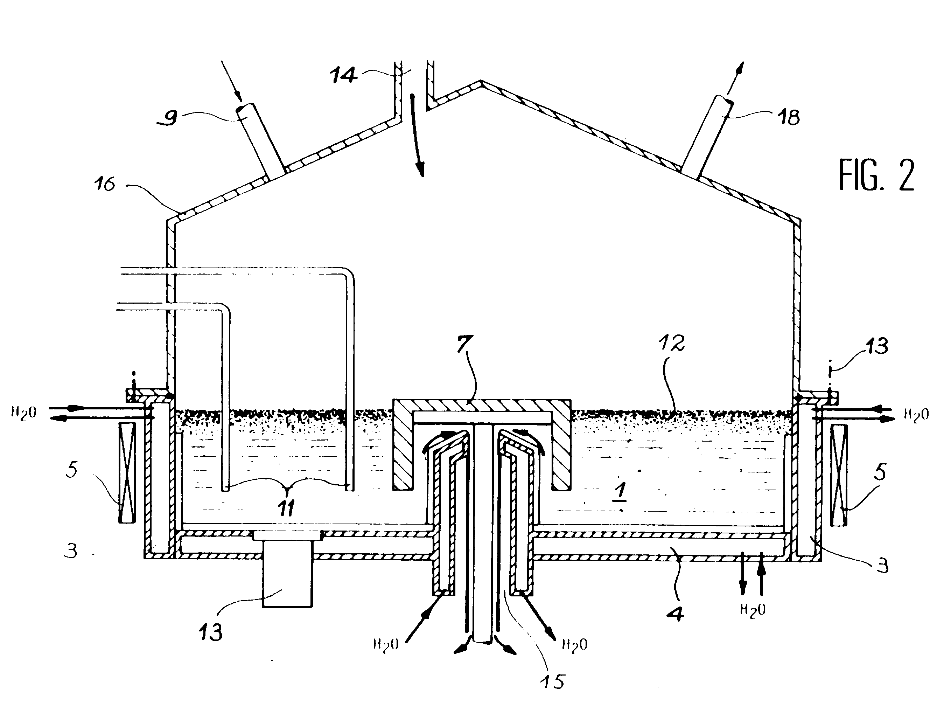

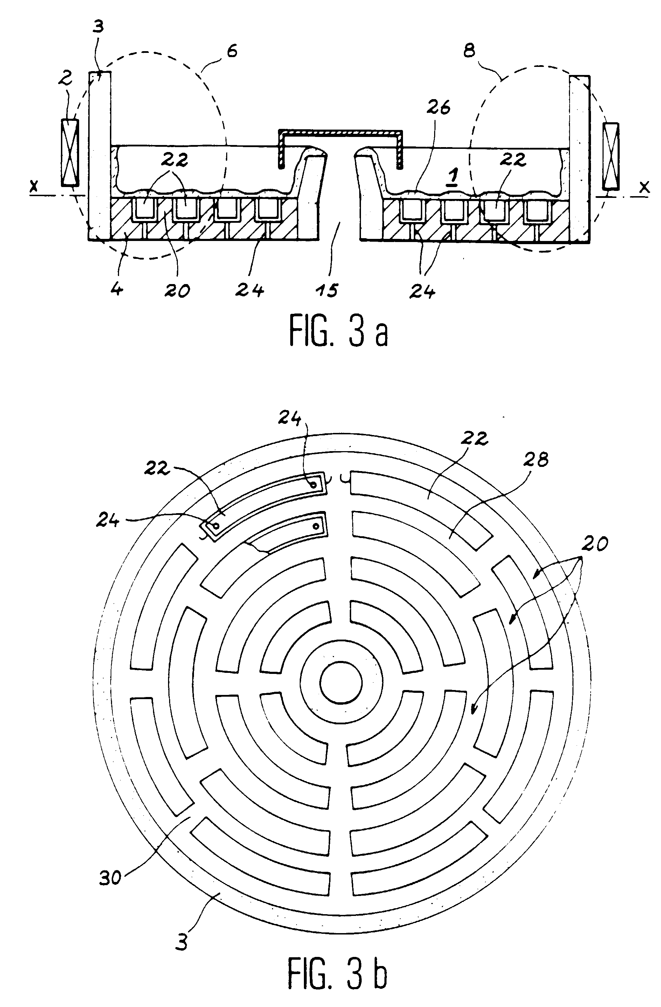

De toute façon, l'invention sera mieux comprise en se référant à la description qui suit d'un exemple de mise en oeuvre du four à induction, exemple qui sera décrit en se référant aux figures 2 et 3, sur lesquelles :
- la figure 2 est une vue en coupe très schématique d'un four, objet de l'invention ;
- la figure 3 représente en élévation 3a et en coupe 3b selon XX de la figure 3a, un mode de mise en oeuvre avantageux de la sole du four de la figure 2.

Pour concrétiser l'exposé précédent, on précisera que si l'on se contentait de diminuer la hauteur d'un four classique tel que celui représenté sur la figure 1 et lui donner par exemple la hauteur h indiquée sur cette figure, les courbes 6 et 8 délimitant la zone de pénétration des courants induits dans le bain fondu resteraient identiques et l'on ne chaufferait plus à ce moment la que les seules zones 2a indiquées latéralement sur cette figure 1 et qui ne représentent, à l'évidence, qu'une toute petite partie du volume du bain. C'est dire que si l'on n'associe pas à la diminution de hauteur du four une sole permettant le passage du flux magnétique, il devient complètement impossible et illusoire de fondre l'ensemble de la masse d'oxydes déposée dans ce four.

La figure 2 représente le schéma général d'un four à induction conforme à l'invention.

Dans l'exemple de la figure 2, le four de capacité 30 kg/h est construit autour d'un creuset métallique sectorisé, refroidi par une circulation d'eau et de diamètre 50 cm. Le métal constitutif du creuset est choisi en fonction de sa capacité à résister aux vapeurs corrosives dégagées par le produit fondu (par exemple en acier inoxydable si le produit fondu dégage des vapeurs nitreuses).

Le creuset froid 3 est entouré d'un inducteur 5 alimenté en courant alternatif haute frequence de 10 à 100 kHz). Si le produit figé sur la paroi froide est suffisamment isolant on peut faire jouer à l'inducteur, si possible monospire, le rôle de creuset en supprimant le creuset sectorisé.

Le bain fondu 1 repose sur une sole refroidie 4 qui sera décrite plus loin en se référant à la figure 3. Selon l'invention, la hauteur du bain fondu est inférieure à 20% du diamètre du four pour limiter les pertes thermiques ; cette hauteur doit être suffisante pour permettre une fusion stable, c'est-à-dire être supérieure à environ 2 cm. Dans l'exemple non limitatif de la figure 1, elle est égale à 8 cm.

Le bain fondu est recouvert en permanence d'une couche 12 de mélange non fondu de produit de base. Ce mélange fond dans le bas de la couche 12 au contact du produit fondu, le haut de la couche restant quasiment froid, et piégeant la majorité des éléments volatils qui s'échappent du bain fondu 1. Une alimentation continue et dosée 14 en produit à fondre permet de maintenir constante l'épaisseur de cette couche 12 lorsque sa partie inférieure fond et se mélange au produit fondu.

La température du bain est mesurée en permanence par un ou plusieurs thermocouples 11. Cette température peut être réglée en permanence en agissant sur le courant circulant dans l'inducteur 5.

Un système de débordement du produit fondu par la buse de sortie 15 permet de maintenir constant le niveau du bain fondu. Cette buse 15 peut être constituée d'un tube métallique ou réfractaire chaud traversant la sole froide, ou bien, comme représenté en 15, d'un tube métallique refroidi de forme choisie pour éviter l'accrochage et la solidification du produit fondu sur les parois internes du tube.

Une cloche 7 en réfractaire ou en métal, refroidie ou non, empêche le produit non fondu d'être entraîné dans la buse, et permet de prélever le produit fondu sous le niveau de la surface de façon à garantir un temps de séjour minimal de ce dernier dans le creuset.

Une enceinte 16 placée au-dessus du four permet de fondre en atmosphère confinée et de limiter le débit de gaz à dépolluer. Une entrée d'air à débit contrôlé 9 facilite l'entraînement des polluants par le tuyau 18 vers un poste de traitement des gaz, et évite l'accumulation de produits condensables sur les parois du creuset froid.

Le four est conçu de façon à permettre un arrêt, un nettoyage et un redémarrage très rapides pour pouvoir changer de produit à fondre sans pollution du nouveau produit par l'ancien. La sole est donc équipée d'une buse de vidange totale 13 réfractaire ou bien métallique (refroidie ou non) qui permet de vider entièrement le four. Lorsque la vidange du bain fondu est terminée on arrête le chauffage en interrompant le courant circulant dans l'inducteur. Il reste alors une mince couche de verre figé contre les parois du creuset et de la sole ; cette couche n'est pas adhérente. Le creuset froid est soulevé grâce à un système de préhension 13 et la couche de verre restante est enlevée. On peut donner une légère conicité au creuset pour faciliter cette opération. Le démarrage de la fusion est effectué à l'aide de diverses méthodes connues adaptées au produit à fondre :
- sucepteur soluble plongé dans le verre et chauffé par l'inducteur entourant le creuset ;
- sucepteur insoluble plongé dans le verre, chauffé par l'inducteur entourant le creuset, et retiré du verre à la fin de l'opération de démarrage ;
- sucepteur rayonnant, placé au-dessus du verre et chauffé par l'inducteur entourant le creuset ;
- voûte rayonnante ;
- brûleur à gaz.

En se référant maintenant aux figures 3 et 3b, on va décrire l'un des modes de réalisation préférentiels de la sole composite constituant le four à induction objet de l'invention.

Sur ces figures, on reconnaît la paroi froide 3 du four, la buse de sortie 15, qui dans cet exemple, est centrale et la sole 4 qui ferme le creuset à sa partie inférieure. Conformément à l'invention, cette sole 4 est composée d'un matériau réfractaire 20 dans lequel sont noyés des inserts ou tubes métalliques 22 rangés concentriquement dans le réfractaire 20 selon des couronnes concentriques. Chacun des inserts tels que 22 comporte une entrée et une sortie de liquide de refroidissement dirigées vers l'extérieur de la sole. Plusieurs de ces conduits d'entrée et de sortie 22 prévus pour la circulation du liquide de refroidissement ont été dessinés schématiquement en 24 sur les figures 3a et 3b.

Comme on l'a expliqué précédemment, ce sont les zones réfractaires 20 qui, en permettant une pénétration régulière du champ magnétique produit par l'inducteur 2, permettent un trajet des lignes de force tel que représenté en pointillé sur cette figure et par conséquent le chauffage d'une partie importante de la masse d'oxyde 1. Sur la figure 3a on voit une croûte solide 26 dont l'épaisseur est plus importante au-dessus de chacun des inserts métalliques 22 et qui protège le fond de la sole 4 de la corrosion des oxydes du bain fondu 1.

Bien entendu, l'exemple qui a été décrit ici ne l'est qu'à titre limitatif et notamment la forme, le nombre et la répartition des inserts métalliques 22 au sein de la masse réfractaire 20 sont entièrement laissés au choix de l'homme de métier qui sera dans chaque cas, à même de choisir la structure qu'il souhaite en fonction des objectifs recherchés. Ceci est d'ailleurs également valable pour l'emplacement de la buse 15 de déversement des oxydes fondus vers l'extérieur que l'on a représentée ici au centre du creuset mais qui pourrait aussi bien en cas de nécessité être décentrée sur le côté de celui-ci.

L'espace 28 de réfractaire 20 entre deux couronnes concentriques adjacentes est un compromis entre une bonne transparence au champ (espace large) et un refroidissement suffisant du réfractaire (espace étroit) pour éviter que le verre fondu ne vienne au contact du réfractaire et le corrode (en général un espace de l'ordre de 1 à 2 cm représente un bon compromis).

L'espace 30 de réfractaire 20 entre deux inserts adjacents d'une même couronne est un compromis entre un refroidissement suffisant du réfractaire (espace étroit) et une bonne isolation électrique entre deux secteurs adjacents (espace large) ; le potentiel électrique entre deux secteurs adjacents croit avec la tension aux bornes de l'inducteur et décroît avec le nombre d'inserts par couronne (à titre d'exemple pour une tension de 1000 V aux bornes de l'inducteur et 10 inserts par couronne un espace de 1 à 2 cm est suffisant).

A titre d'exemple, dans ce four de 50 cm de diamètre, la hauteur du bain fondu est égale à 8 cm, la capacité de fusion est égale à 30 kg/h, la perte thermique vers les parois latérales est égale à 38 kW pour une densité de flux de 30 W/cm², la perte thermique vers le fond est égale à 20 kW pour une densité de flux de 10 W/cm². La sole que nous proposons permet de conserver un rendement électrique de 80%, ce qui conduit à une consommation d'énergie spécifique égale à 3 kWh/kg.

En conclusion, le four selon l'invention permet d'élaborer des produits à affinage réduit avec une consommation spécifique faible et un coût d'investissement faible, car le creuset moins haut est plus facile à construire, et le générateur HF de faible puissance. Cette technique permet également de faire jouer à l'inducteur le rôle de creuset si les caractéristiques du produit fondu le permettent.

## Revendications

1. Four à fusion en continu de mélanges d'oxydes par induction directe à haute fréquence à temps d'affinage très court et à faible consommation en énergie, comprenant une entrée (14) et une buse de sortie (15) des oxydes en continu dans un creuset métallique à parois froides (3) chauffé par une bobine à haute fréquence (5), caractérisé en ce que, lors du fonctionnement du four, la hauteur du bain d'oxydes est comprise entre 2 cm et 20% du diamètre du creuset métallique et en ce que la sole (4) se compose d'inserts métalliques indépendants (22) noyés dans un matériau réfractaire (20), chacun des inserts métalliques précédents étant constitué d'une portion de tube comprenant une entrée et une sortie (24) pour la circulation d'un liquide de refroidissement, la sole (4) du four étant ainsi à la fois transparente au champ magnétique inducteur et suffisamment refroidie pour assurer la formation et le maintien d'une croûte solide protectrice au fond du creuset.

2. Four à fusion en continu selon la revendication 1, caractérisé en ce que la sole (4) a la forme d'une plaque circulaire dans laquelle les inserts métalliques (22) sont répartis selon une série de couronnes concentriques comportant chacune plusieurs inserts courbes séparés les uns des autres par le matériau réfractaire (20).

3. Four de fusion selon l'une des revendications 1 ou 2, caractérisé en ce que la sole (4) du creuset est équipée d'une buse (15) de vidange rapide et totale.

4. Four de fusion selon l'une quelconque des revendications 1 à 3, caractérisé en ce que l'atmosphère située au-dessus du four est confinée dans une enceinte (16) parcourue par un débit contrôlé de gaz de balayage.

## Patentansprüche

1. Kontinuierlicher Schmelzofen für Oxidgemenge, direkte Hoch-Frequenz-Induktion verwendend, mit sehr kurzen Raffinierzeiten und niedrigem Energieverbrauch, umfassend einen Eingang (14) und eine Düse (15) des kontinuierlichen Austritts der Oxide in einem Metalltiegel mit kalten Wänden (3), geheizt durch eine Hochfrequenzspule (5),
**dadurch gekennzeichnet,**
daß bei Betrieb des Ofens die Höhe des Oxidbades enthalten ist zwischen 2 cm und 20% des Durchmessers des Metalltiegels, und dadurch, daß die Sohle (4) gebildet wird durch selbständige metallische Einsätze (22), eingelassen in ein refraktäres Material (20), wobei jeder der vorhergehenden metallischen Einsätze gebildet wird durch ein Rohrstück, das einen Eingang und einen Ausgang (24) für den Durchfluß einer Kühlflüssigkeit aufweist, und die Ofensohle (4) somit zugleich durchlässig für das Induktionsmagnetfeld und ausreichend gekühlt ist, um die Bildung und Aufrechterhaltung einer festen Schutzkruste auf dem Boden des Tiegels sicherzustellen.

2. Kontinuierlicher Schmelzofen nach Anspruch 1, dadurch gekennzeichnet, daß die Sohle (4) die Form einer kreisförmigen Platte aufweist, in der die metallischen Einsätze (22) einer Serie von konzentrischen Ringen entsprechend angeordnet sind, von denen jeder mehrere gekrümmte Einsätze umfaßt, voneinander getrennt durch das refraktäre Material (20).

3. Schmelzofen nach einem der Ansprüche 1 oder 2, dadurch gekennzeichnet, daß die Sohle (4) des Tiegels mit einer Schnell- und Totalentleerungsdüse (15) ausgestattet ist.

4. Schmelzofen nach einem der Ansprüche 1 bis 3, dadurch gekennzeichnet, daß die über dem Ofen befindliche Atmosphäre eingeschlossen ist in einen Behälter (16), durchströmt von einer kontrollierten Menge Spülgas.

## Claims

1. Furnace for the continuous melting of mixtures of oxides by direct induction at high frequency and a very short refining time and with a low energy consumption, comprising an intake (14) and a nozzle (15) for the continuous discharge of oxides into a metal crucible (3) having cold walls heated by a high frequency coil (5), characterized in that the height of the oxide bath is between 2 cm and 20% of the diameter of the metal crucible and in that the hearth is formed from independent metal inserts embedded in a refractory material, each of said metal inserts being constituted by a tube portion having an inlet and an outlet for the circulation of a cooling liquid, the furnace hearth (4) thus being both transparent to the inducing magnetic field and sufficiently cooled to ensure the formation and maintenance of a protective solid crust at the bottom of the crucible.

2. Continuous melting furnace according to claim 1, characterized in that the hearth (4) is shaped like a circular plate, in which the metal inserts (22) are distributed in accordance with a series of concentric rings, each having several curved inserts separated from one another by the refractory material (20).

3. Melting furnace according to one of the claims 1 or 2, characterized in that the crucible hearth (4) is equipped with a total, rapid emptying nozzle (15).

4. Melting furnace according to any one of the claims 1 to 3, characterized in that the atmosphere above the furnace is confined in an enclosure (16) traversed by a controlled scavenging gas flow.
